# EUROPÄISCHE PATENTSCHRIFT

(11) **EP 0 627 288 B1**
(45) Veröffentlichungstag und Bekanntmachung des Hinweises auf die Patenterteilung: **07.01.1998**
(21) Anmeldenummer: 94103007.4
(22) Anmeldetag: 01.03.1994
(51) Int. Cl.: B29B 9/16, B29B 9/06, F26B 17/00, B01D 29/52, B01D 29/66

(54) **Granulierwassertank mit Feinstflusenabscheidung**
Water tank for granulation with fines separation
Réservoir d'eau pour un procédé de granulation, avec séparateur des particules fines

(30) Priorität: 01.06.1993 DE 4318072
(43) Veröffentlichungstag der Anmeldung: 07.12.1994
(73) Patentinhaber: Werner & Pfleiderer GmbH, 70469 Stuttgart (DE)
(72) Erfinder: Rudolph, Joachim, Dipl.-Ing. (FH), D-71263 Weil der Stadt (DE)

(56) Entgegenhaltungen:
- DE-A- 2 705 713
- DE-C- 3 722 684
- DE-C- 4 202 345
- PATENT ABSTRACTS OF JAPAN vol. 5, no. 43 (M-60)(715) 23. März 1981 & JP-A-56 002 114 (KOBE SEIKOSHO K.K.) 10. Januar 1981
- SOVIET INVENTIONS ILLUSTRATED Section Ch, Week 8735, 9. September 1987 Derwent Publications Ltd., London, GB; Class L, AN 87-249254/35 & SU-A-1 284 963 (METAL WKS. DES.) 23. Januar 1987
- SOVIET PATENTS ABSTRACTS Section Ch, Week 9211, 29. April 1992 Derwent Publications Ltd., London, GB; Class LM, AN 92-086905/11 & SU-A-1 641 783 (URALS CONS. MAT. RES.) 15. April 1991

## Beschreibung

Die Erfindung betrifft einen Granulierwassertank mit Feinstflusenabscheidung der im Oberbegriff des Patentanspruches 1 genannten Art.

Bei der Herstellung von Kunststoffgranulat werden erhebliche Mengen (ca. 3 bis 85 Liter/sec) Wasser als Kühl- und Transportmedium für das Granulat benötigt. Dabei wird der nach der Entwässerungseinrichtung anfallende Wasserstrom einem Granulierwassertank zugeführt. In diesem werden die Feinteile (Flusen), die hauptsächlich durch mechanische Einflüsse in der Granulatförderstrecke entstehen, abgeschieden. Danach wird das Wasser wieder der Granuliereinrichtung zugeführt.

Aus der DE 37 22 684 C1 ist ein solcher Granulierwassertank bekannt, der stirnseitig mit einem relativ grossen Zulauftopf für die Einleitung des Wasserstromes ausgerüstet ist. Von hier aus wird der Wasserstrom über mehrere im Tank in einer horizontalen Reihe angeordnete mit stirnseitigen Dichtelementen versehene hohlkörperförmige Siebkörper geleitet. Die Siebkörper sind für die Abscheidung der Flusen mit Feinfilter ausgerüstet. Im hinteren Siebkörper ist ein Flusenkorb angeordnet, welcher von Zeit zu Zeit zwecks Reinigung aus dem Granulierwassertank herausgehoben wird.

Neben der öfters erforderlichen Reinigung des Flusenhalters und der Siebkörper ist bei diesem Wassertank eine Einleitung eines mit Fehlgranulat (Anfahrgranulat) oder mit Agglomerate beladener Wasserstrom, wegen der Gefahr der Beschädigung der empfindlichen Flusensiebe- und filter nicht möglich. Deshalb ist es bisher üblich den mit Anfahrgranulat beladenen Wasserstrom einer anderen Einrichtung zuzuführen zumindest aber den Wasserstrom vor der Zuführung zum Granulierwassertank vom Anfahrgranulat oder beim Betrieb entstehender Agglomerate zu befreien.

Aus der DE 42 02 345 C1 ist es ferner bekannt bei einem Granulierwassertank unterhalb der Siebeinrichtung einen Reinigungsrotor anzuordnen, der mit Strahldüsen für die Reinigung der Siebeinrichtung ausgerüstet ist. Auch in diesem Granulierwassertank kann keine mit Agglomerate und/oder Fehlgranulat beladener Wasserstrom eingeleitet werden.

Der Erfindung liegt die Aufgabe zugrund einen Granulierwassertank mit Feinstflusenabscheidung platzsparend zu gestalten und so auszubilden, dass der zugeführte Wasserstrom neben den Flusen auch mit Agglomerate und/oder Anfahrgranulat beladen sein kann, ohne dass eine Beschädigung der Flusen- und Feinstflusensiebe eintritt.

Die Aufgabe wird erfindungsgemäss durch die im Patentanspruch 1 angegebenen Merkmale gelöst.

Durch Wegfall des stirnseitigen Einlaufes für den beladenen Wasserstrom, der nunmehr senkrecht dem Granulierwassertank zugeführt wird, ist eine vorteilhafte platzsparende Wassertankanordnung gegeben. Eine Beschädigung der feinmaschigen Siebeinrichtungen für die Flusenabscheidung ist nunmehr ausgeschlossen, auch dann, wenn der Wasserstrom mit Agglomerate oder Fehlgranulat beladen dem Wassertank zugeführt wird. In Weiterführung der Erfindung ist nach den Merkmalen des Anspruches 2, eine sichere Zuführung und Verteilung des Wasserstromes über die Siebeinrichtung gesichert. Mit den Merkmalen des Anspruches 3 wird eine Wasseroberflächenabschöpfung im Granulierwassertank bei gleichzeitiger vorteilhafter Feinstflusenabscheidung erreicht.
Mit den Merkmalen des Anspruches 4 wird ein Freispülen der feinmaschigen Siebeinrichtung und eine Unterstützung der Querströmung der Flusen in der zweiten Ebene erreicht.

Die Erfindung ist nachfolgend an Hand eines in der Zeichnung dargestellten Ausführungsbeispieles näher erläutert. Hierin zeigt.

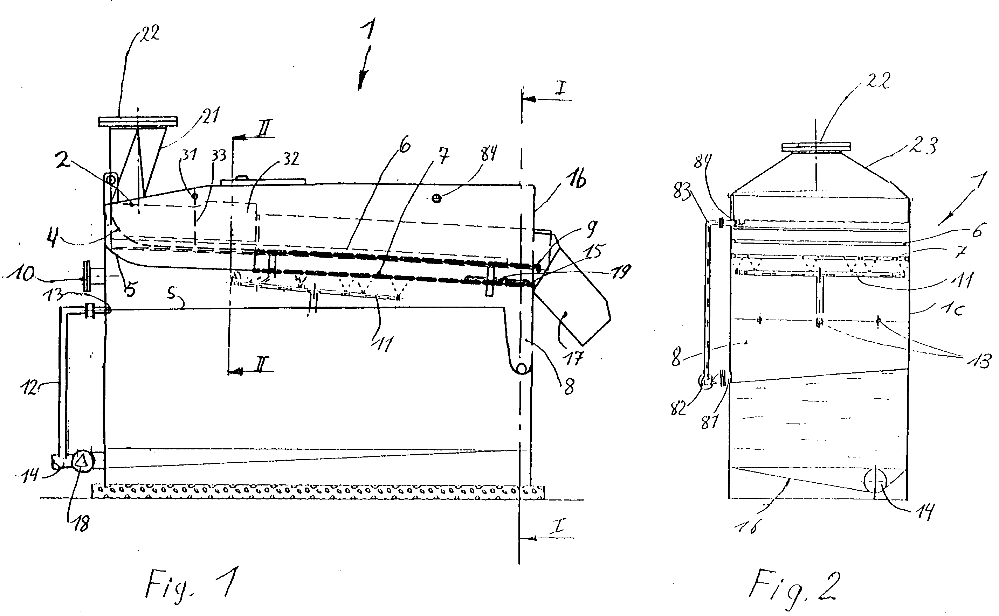

- Fig. 1: einen Granulierwassertank in vereinfachter schematischer Darstellung
- Fig. 2: eine Seitenansicht gemäss der Schnittlinie I-I aus Fig. 1

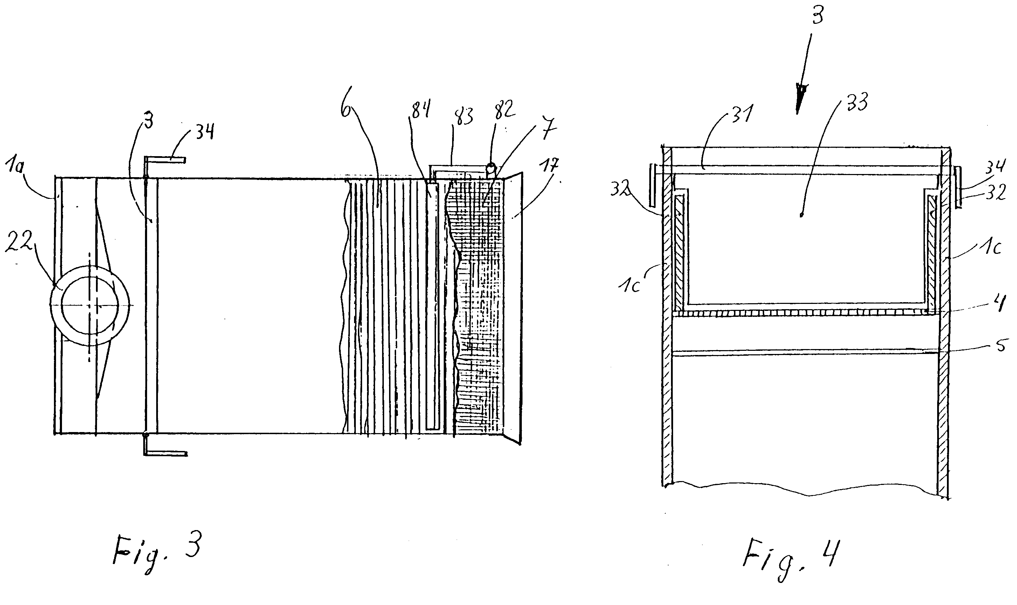

- Fig. 3: eine Draufsicht gemäss Fig. 1, zum Teil aufgebrochen
- Fig. 4: das Einlaufregulierorgan gemäss Schnitt II-II nach Fig. 1

An einem Ende die Tankbreite überspannend ist auf einem Granulierwassertank 1 eine Eintrittsöffnung 2 für den mit Flusen und zum Teil mit Anfahrgranulat und Agglomeraten beladene Wasserstrom angeordnet. Die Eintrittsöffnung 2 ist mittels eines trichterförmigen Aufbaus 21 mit einem Zuführstutzen 22 einer nicht dargestellten Entwässerungsanlage für Kunststoffgranulat verbunden. Unter der Eintrittsöffnung 2 von der Stirnwand 1a ausgehend ist ein bogenförmiges Sieb 4 (Spaltsieb bzw. Conidursieb) angeordnet, dem sich eine die Tanklänge durchgreifende Granulatransportkassette 6 anschliesst.
Diese ist an der gegenüberliegenden Stirnwand 16 mit einem Granulatauslauf 9 verbunden.

In einer zweiten Ebene sind von der Stirnwand 1a aus gesehen zuerst ein Einlaufblech 5 und daran anschliessend die Siebeinrichtung 7 für die Flusenabscheidung angeordnet. Die Siebeinrichtung 7 ist mit einem Flusenauslauf 15 verbunden. Beiden Ausläufen 9 und 15 ist eine gemeinsame Schurre 17 zugeordnet.Beide Ebenen sind vom Eingang zum Ausgang hin leicht fallend ausgeführt.
Der Eintrittsöffnung 2 ist ein Einlaufregulierorgan 3 zugeordnet. Dieses besteht aus einer Klappe 33, die an einer in den Seitenwänden 1c des Tankes 1 gelagerten Welle 31 befestigt ist. Zur Abdichtung der Klappe 33 sind dieser im Schwenkbereich vom Sieb 4 ausgehende senkrechte Wände 32 zugeordnet. Über den Hebel 34 ist die Klappenstellung regulierbar.
Mit 10 ist ein Wasserzulauf für eine Füllstandregulierung im Granulierwassertank 1 bezeichnet. In der Höhe des Wasserspiegels S sind in der Seitenwand 1a mehrere Düsen 13 vorgesehen, die über eine Leitung 12 mit der Granuliervorrichtungszulaufleitung 14 verbunden sind.

Die Wirkungsweise des Granulierwassertankes ist folgende:
Der über den Einlaufstutzen 22 zugeführte Wasserstrom von einer nicht gezeigten Entwässerungsanlage wird über den trichterförmigen Aufbau 21 und der Klappe 33 gleichmässig auf die gesamte Breite der Eintrittsöffnung 2 verteilt. Durch das Sieb 4 laufen ca. 80% des Wassers auf das darunter beabstandete Einlaufblech 5, welches auf der 2. Ebene eine Querstromfiltration auf dem Sieb 7 bewirkt. Über das Einlaufregulierorgan 3 wird eine vollständige Beaufschlagung des Siebes 4, die Füllstandshöhe im Aufbau 21 und ein gleichmässiger Zulauf des Restwasser auf die Granulatransportkassette 6 bewirkt. Über den Hebel 34 kann die Stellung der Klappe 33 entsprechend eingestellt werden.
Das Fehlgranulat und die Agglomerate, die durch das Sieb 4 aufgefangen werden, werden mit Restwasser über die Granulatransportkassette 6 dem Granulatauslauf 9 zugeführt. Das beim Transport abgeschiedene Restwasser tropft auf das Sieb 7 der 2. Ebene.

Die Filtrierung der Feinteile (Flusen) erfolgt auf dem Sieb 7 in der zweiten Ebene. Die Flusen werden dabei durch die Querströmung in Richtung Flusenauslauf 15 bewegt. Durch die Gegensprühvorrichtung 11 wird dieser Vorgang bei gleichzeitiger Reinigung des Siebes 7 unterstützt.
Von Zeit zu Zeit werden die Feinstflusen, die durch das Sieb 7 (Maschenweite ca 100 µm) hindurchgetreten sind und zumeist auf der Wasseroberfläche schwimmen über die Düsen 13 in die Überlaufrinne 8 gespült. Von dort werden diese über die Pumpe 82, Leitung 83 und dem Rückführzulaufrohr 84 in den Granulierwassertank 1 gefördert und auf den hinteren Teil der Granulatransportkassette 6 aufgegeben. Dort fallen Sie durch die groben Maschen (ca. 1,5mm) des als Spaltsiebes ausgebildeten Granulatransportkassette 6 auf das darunter liegende Sieb 7 der zweiten Ebene. In diesem letzten Abschnitt des Siebes 7 befindet sich durch den Quertransport ein Flusenfell 19. Durch dieses Flusenfell 19 werden die rückgeführten Feinstflusen aufgefangen und zusammen mit dem Flusenfell 19 über den Flusenauslauf 15 der Schurre 17 zugeführt. Damit ist sichergestellt, dass neben einer sicheren Abscheidung von Fehlgranulat und Agglomerate ohne Beschädigung des Siebes 7 auch eine sichere Abscheidung von Feinstflusen aus dem Granulierwasser erreicht ist.

## Patentansprüche

1. Granulierwassertank mit Feinstflusenabscheidung zur Aufnahme des in einer Entwässerungsanlage für Kunststoffgranulat anfallenden Wasserstromes, mit einer im oberen Bereich des Tankes angeordneten Eintrittsöffnung (2) für den Wasserstrom, die auf eine horizontal angeordnete vom Wasserstrom überströmte Siebeinrichtung (7) ausgerichtet ist, welche - in Strömungsrichtung gesehen - an ihrem Ende eine Flusenabscheideeinrichtung aufweist und mit einer unterhalb des Wasserspiegels in der Nähe des Tankbodens angeordnete Austrittsöffnung für das gereinigte Wasser, die mit einer Pumpe verbunden ist,
dadurch gekennzeichnet, dass an einem Ende die Tankbreite überspannend auf dem Granulierwassertank (1) die Eintrittsöffnung (2) mit einem ihr zugeordneten Einlaufregulierorgan (3) angeordnet ist, welche mit einem Zuführstutzen (22) für den Wasserstrom über einen sich konisch verjüngenden Aufbau (21) verbunden ist, wobei unter der Eintrittsöffnung (2) im Granulierwassertank (1) von einer Stirnwand (1a) ausgehend ein bogenförmiges Sieb (4) angeordnet ist, dem sich eine die Granulierwassertanklänge durchgreifende Granulatransportkassette (6) (1. Ebene) anschliesst, welche mit einem an der gegenüberliegenden Stirnwand (1b) versehenen Granulatauslauf (9) verbunden ist, wobei beabstandet darunter als zweite Ebene die Siebeinrichtung (7)- von einem Einlaufblech (5) bis zu einem an der gegenüberliegenden Stirnwand (1b) vorgesehenen Flusenauslauf (15) reichend - angeordnet ist.

2. Granulierwassertank nach Anspruch 1, dadurch gekennzeichnet, dass das Einlaufregulierorgan (3) aus einer mittels eines Hebels (34) verstellbaren Klappe (33) besteht, die an einer in den Seitenwänden (1c) des Tankes (1) gelagerten Welle (31) befestigt und über auf dem Sieb (4) angeordnete senkrechte Wände (32) beidseitig in ihrem Schwenkbereich geführt ist.

3. Granulierwassertank nach Anspruch 1, dadurch gekennzeichnet, dass in der Stirnwand (1a) in der Höhe des Wasserspiegels (s) mehrere mit Umwälzwasser beaufschlagbare Düsen (13) angeordnet sind und diesen gegenüberliegend vor der Stirnwand (1b) eine Überlaufrinne (8) angeordnet ist, welche über eine mit einer Pumpe (82) versehenen Leitung (83), mit einem oberhalb der Granulatransportkassette (6) angeordneten Rückführzulauf (84) verbunden ist.

4. Granulierwassertank nach einem oder mehreren Ansprüche 1 bis 3, dadurch gekennzeichnet, dass unterhalb der Siebeinrichtung (7) wenigstens eine Gegensprühvorrichtung (11) angeordnet ist.

## Claims

1. Granulator water tank with fine slurry separation for reception of the water flow occurring in a dewatering plant for synthetic material granulate, with an inlet opening (2), which is arranged in the upper region of the tank and is aligned with a horizontally arranged sieve equipment (7), for the water flow, which filter equipment is flowed through by the water flow and - seen in flow direction has at its end a slurry separation equipment, and with an outlet opening, which is arranged below the water level in the proximity of the tank base and is connected with a pump, for the clarified water,
characterised thereby that the inlet opening (2) together with an inflow regulating element (3), which is associated therewith and is connected by way of a conically tapering superstructure (21) with a feed stub pipe (22) for the water flow, is arranged at one end on the granulator water tank (1) to span over the tank width, wherein arranged under the inlet opening (2) in the granulator water tank (1) is an arcuate sieve (4) which extends out from one end wall (1a) and is connected to a granulate transport box (6) (1st plane), which engages through the granulator water tank length and is connected with a granulate outlet (9) provided at the opposite end wall (1b), wherein the sieve equipment (7) is arranged at a spacing thereunder as a second plane and reaches from an inflow plate (5) to a slurry outlet (15) provided at the opposite end wall (1b).

2. Granulator water tank according to claim 1, characterised thereby that the inflow regulating element (3) consists of a flap (33) which is adjustable by means of a lever (34), is fastened to a shaft (31) borne in the side walls (1c) of the tank (1) and is guided at both sides and in its pivot region by way of vertical walls (32) arranged on the sieve (4).

3. Granulator water tank according to claim 1, characterised thereby that several nozzles (13) chargeable with circulating water are arranged in the end wall (1a) at the height of the water level (5), and an overflow gutter (8) is arranged opposite these and in front of the end wall (1b) and is connected by way of a duct (83), which is provided with a pump (82), with a return feed (84) arranged above the granulate transport box (6).

4. Granulator water tank according to one or ore of claims 1 to 3, characterised thereby that at least one counter spray device (11) is arranged below the sieve equipment (7).

## Revendications

1. Réservoir d'eau de granulation avec séparation des barbes très fines pour recevoir le flux d'eau qui arrive dans une installation d'épuisement pour granulés plastiques, comportant une ouverture d'entrée (2) pour le flux d'eau, qui est disposé dans la zone supérieure du réservoir et qui est orientée sur un dispositif de tamisage (7), disposé horizontalement qui est submergé par le flux d'eau et qui - vu dans le sens de l'écoulement - présente à son extrémité un dispositif de séparation des barbes, et comportant une ouverture de sortie pour l'eau épurée, qui est disposée en dessous du niveau de l'eau, au voisinage du fond du réservoir et qui est reliée à une pompe, caractérisé par le fait qu'à une extrémité est disposée, sur le réservoir d'eau de granulation (1), l'ouverture d'entrée (2) qui franchit la largeur du réservoir, comporte un organe (3) de régulation d'admission qui lui correspond et qui est reliée à une tubulure d'admission (22) pour le flux d'eau par l'intermédiaire d'un accessoire (2-1) qui va en diminuant en cône, réservoir dans le cas du duquel, sous l'ouverture d'entrée (2) est disposé dans le réservoir d'eau de granulation (1), en partant d'une paroi frontale (1a), un tamis en forme d'arc (4) auquel se raccorde un caisson de transport des granulés (6) (premier plan) qui franchit la longueur du réservoir d'eau de granulation et qui est relié à une sortie (9) des granulés prévue à la paroi frontale opposée (1b), et réservoir dans le cas duquel, à une certaine distance par-dessous, est disposé, comme second plan, le dispositif de tamisage (7) - qui va depuis une tôle d'entrée (5) jusqu'à une sortie des barbes (15) prévue sur la paroi frontale opposée (1b).

2. Réservoir d'eau de granulation selon la revendication 1, caractérisé par le fait que l'organe (3) de régulation d'admission est constitué d'un volet (33) qui peut se régler au moyen d'un levier (34), qui est fixé à un axe (31) porté dans les parois latérales (1c) du réservoir (1) et qui est guidé dans la zone de son pivotement, des deux côtés, par des parois verticales (32) disposées sur le tamis (4).

3. Réservoir d'eau de granulation selon la revendication 1, caractérisé par le fait que dans la paroi frontale (1a), à hauteur du niveau (s) de l'eau, sont disposées plusieurs buses (13) qui peuvent être alimentées en eau de recyclage et qu'en face de ces buses est disposé, devant la paroi frontale (1b), une goulotte de débordement (8) qui, par l'intermédiaire d'une conduite (83) équipée d'une pompe (82), est reliée à un tube d'arrivée des retours disposé au-dessus du caisson (6) de transport des granulés.

4. Réservoir d'eau de granulation selon l'une ou plusieurs des revendications 1 à 3, caractérisé par le fait qu'en dessous du dispositif de tamisage (7) est disposé au moins un dispositif de rinçage à contre-courant (11).
